# EUROPEAN PATENT APPLICATION

(11) **EP 1 164 497 A1**
(43) Date of publication of application: **19.12.2001**
(21) Application number: 00112509.5
(22) Date of filing: 13.06.2000
(51) Int. Cl.: G06F 17/30

(54) **Hash translation method and apparatus**

(71) Applicant: MOTOROLA, INC., Schaumburg, IL 60196 (US)
(72) Inventor: Zabarski, Boris, Petah Tikva (IL); Kirzner, Eran, Rishon Le Ziyyon (IL); Gandal, Stefania, Herzlia (IL); Ben Noun, Eitan, 69027 Tel Aviv (IL)
(74) Representative: Gibson, Sarah Jane

(57) **Abstract**

A method and apparatus for translating an input key to generate a output index value, the method (100) comprising the steps of: receiving the input key (130); applying a first hash value function to a first portions of the input key to generate a first received hash value (132); applying a second hash value function to a second portion of the input key and to a seed value to generate a second received hash value (134); checking whether the first and second received hash value match a first and second hash values generated from a matching output index value out of a group of output index value and accordingly providing a output index value (135).

## Description

### Field of the Invention

The present invention generally relates to hash translation method and apparatus using a plurality of hashing functions, and, more particularly, to a collision free hash translation method and apparatus using a plurality of hashing functions.

### Background of the Invention

Hash translation involves translating an input key to produce a hash value, said value can later be used to generate an output index value. Hashing techniques have various implementation, such as identifying flows of data packets sent via a network, and encrypting messages. For example, hash translation is used to identify information packet flow, the flow being identified by an input key that is generated from a TCP/IP cell header. The flow identification is used when applying various application such as billing applications, policing applications, multiplexing and prioritizing application on said flow. Said flow identification can also be used when determining to allocate resources to transfer said flow.

The efficiency of the hash translation can be largely reduced by collisions. A collision occurs when hash values that were generated from distinct input keys are equal.

There is need in providing a fast and memory efficient hash translation method and apparatus, and especially a method and apparatus that are collision free.

### Brief description of the Drawings

While the invention is pointed out with particularity in the appended claims, other features of the invention are disclosed by the following detailed description taken in conjunction with the accompanying drawings, in which:
FIGS.1-2 are schematic descriptions illustrating an apparatus for hash translation, according to a preferred embodiment of the invention; and
FIGS. 3-4 are schematic flow charts of a method for performing hash translation, according to a preferred embodiment of the invention.

### Detailed description of the drawings

The invention provides an improved method for performing hash translation, the method comprising the steps of: (A) Receiving an input key. (B) Applying a first hash value function of a portion of a input key to generate a first received hash value; (C) Using the first received hash value as an index to a first hash table and fetching a selected entry. (D) Applying a second hash value function to a portion of the input key and to a seed value stored within the selected entry to generate a second received hash value. (E) Comparing the second received hash value to the second hash values stored in the selected entry or linked to the selected entry, wherein if there is no match providing a default output index value. (F) If there is a match, comparing the input key to a output index value associated to both first and second matching hash values, if there is a match (G) Providing said output index value; else, providing a default output index value.

A first hash table is generated in a manner that eliminates collisions. Said generation process comprising the steps of: (A) Initializing the entries of the first hash tables. Conveniently the entries are reset. (B) Selecting a first hashing function and a first portion of an input key on which the first hashing function is to be applied to generate a first hash value, selecting a second hashing function and a second portion of an input key on which the hashing function is to be applied to generate a second hash value. (C) Optional step of determining a maximal number of second hash values that can be associated to a single first hash value. Conveniently, said size is equal for all first hash values. (D) Providing an initial seed value. (E) For each output index value out of a group of output index values repeating a step of generating a first hash value and a second hash value, storing the second hash value at a location pointed by the first hash value, storing an output index value at a location linked to or indexed by the second hash value.

Conveniently, step (E) further involves a step of checking whether second hash values that were generated from other output index values having a same first hash value are equal. If the answer is 'no' jumping to step (E). If the answer is 'yes' generating an updated second hash value by applying the second hashing function on the second portion of the output index value and on an updated seed value. Preferably, step (E) involves checking whether a number output index values having the same first hash values exceeds a maximal predetermined value. Said check can be based upon the number of different second hash values associated to a single first hash value. If the number exceeds applying another hashing function and rebuilding the first hash table.

Conveniently, the first hashing function differs from the second hashing function, the first portion of the input key differs from the second portion of the input key, the input key is extracted from a TCP/IP cell header.

An aspect of the invention is that the method requires either one or two fetching steps from an external memory. During a first fetch, a first hash value is used as an index to a first hash table stored within an external memory module. During a optional second fetch an output index value is fetched to be compared with the input key. Said fetch is not required when the apparatus is arranged in a manner that each input key that arrives to the apparatus is associated to a single output index value, that is not a default output index value.

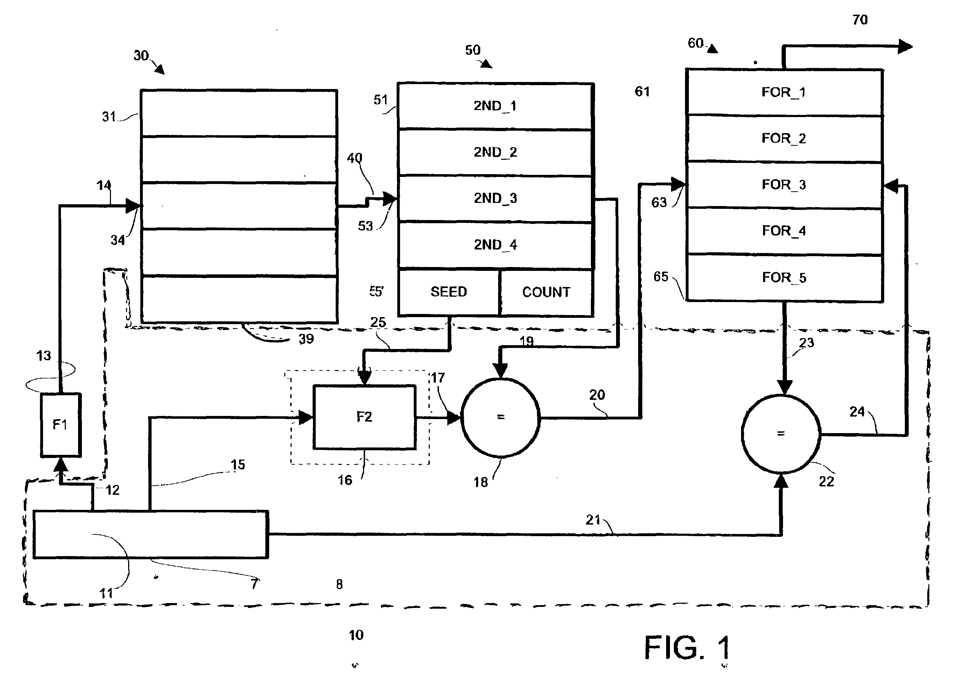

Referring to FIG. 1, apparatus 10 comprising: First hasher Fl 13 for applying a first hashing function on at least a first portion of an input key to generate a first received hash value. Second hasher F2 16 for applying a second hashing function on at least a second portion of an input key to generate a second received hash value. First hash table 30 comprising of a plurality of entries 31 - 39. Control unit 8, illustrated in FIGS. 1-2 by comparators 18 and 22 and adder 78. Control unit 8 providing both address and control signals, illustrated by arrows 14, 76, 77, 80 and 79. Control unit 8 is coupled to first hasher F1 13; second hasher F2 16, first hash table 30 and forwarding table 60. Forwarding table 60 has a plurality of entries for storing output index value, such a FOR_1 - FOR_5 stored in entries 61 -65.

Control unit 8 is adapted to receive an input key 11, to provide a first portion of the input key to the first hasher, to provide a seed value and a second portion of the input key to the second hasher; and to check whether the first and second received hash value match first and second hash values generated from a matching output index value out of a group of output index value and accordingly to provide a output index value.

First hash table 30 has a plurality of entries 31-39. Each entry, such as entry 34 stores a count value, a seed value and at least a single second hash value, such as second hash values 2ND_1 - 2ND_4 51 - 54, SEED 55 and COUNT 56. Register 7 stores an input key 11 during the translation of said input key and stores a output index value when the first hash table is generated. Said addresses can also be stored in a circular queue.

At least a first portion 12 of input key 11 is provided to hasher F1 13 for applying a first hash value function to generate a first received hash value 14, to be used as an index to a first hash table 30. First received hash value 14 points to entry 34 that stores SEED 55, COUNT 56, and four second hash values 2ND_1-2ND_4. Hasher F2 16 receives SEED 55 (as indicated by arrow 25) and at least a second portion 15 of input key 11 and applies on both values a second hashing function and generates a second received hash value, to be provided to comparator 18, as illustrated by arrow 17. Said second received hash value is provided to comparator 18 that compared it to each of four second hash values 2ND_1 - 2ND_4 (as indicated by arrow 16).

Conveniently, after entry 34 is selected its content is sent to a CAM module 50, for allowing fast comparison. Assuming that 2ND_3 matches the second received hash value, then 2ND_3 is used to fetch output index value FOR_23 63 from forwarding table 60 that is associated to 2ND_3. As indicated by arrows 23 and 21, FOR_3 and input key 11 are provided to comparator 22. As indicated by arrow 24, the result of said comparison is provided to table 60. As indicated by arrow 70, if FOR_3 equals input key 11 then FOR_3 is provided as the output index value, else a default address is provided as a output index value. Conveniently, comparators 18 and 22 can be implemented by a control unit that also generates the appropriate control signals and address signals to tables 30 and 70. Said control unit is also able to configure hasher 16 and 13.

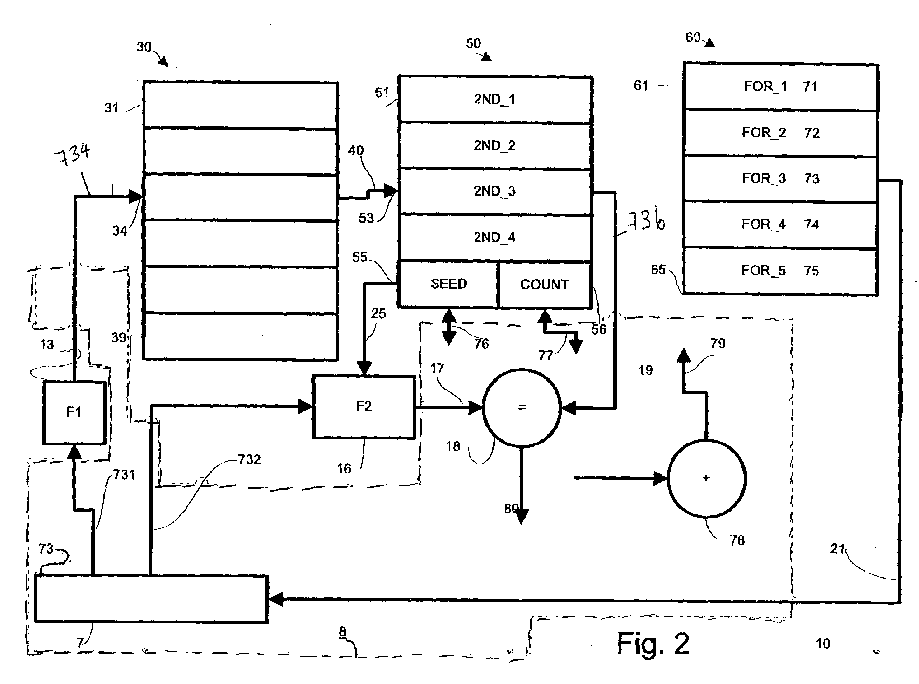

Referring to FIG. 2, illustrating the generation of the first hash table 30. A first and second hashing functions are selected and hasher F1 13 and F2 16 are configured accordingly. A maximal number MAX of output index value that can have the same first hash values is determined. For example, up to 32 second hash values 2ND_1 - 2ND_32 are associated to entry 34. Entry 34 can either store said second hash values or store a pointer or other indication indicating where the second hash values are stored. Entry 34 can further store a seed value SEED 55 and a count value COUNT 56, the first is used to generate a second hash value and the second is used to count the number of second hash value associated to a single first hash value.

Each output index value out of the set of valid output index value is provided to hashers F1, F2 13 and 16 to generate for each output index value a first hash value and a second hash value.

As seen from FIG. 2 an output index value FOR_3 73 is stored in register 7. At least a first portion 731 of FOR_3 73 is provided to hasher F1 13 for applying a first hash value function to generate a first forward hash value 734, used to be used as an index to a first hash table 30. Prior to the processing of FOR_3 the process of pervious output index value caused three second hash values to be generated and stored in entry 34. First forward hash value 734 points to entry 34 that stores SEED 55, COUNT 56, and three second hash values 2ND_1 - 2ND_3. Hasher F2 16 receives SEED 55 (as indicated by arrow 25) and at least a second portion 732 of FOR_3 73. Hasher F2 16 applies on SEED 55 and on second portion 732 a second hashing function and generates a second hash value 2ND_4, to be provided to comparator 18, as illustrated by arrow 17. 2ND_4 is provided to comparator 18 that compares it to second hash values 2ND_1 - 2ND_3 (as indicated by arrow 736). The result 80 of said comparison is provided by comparator 18.

Said result indicates whether a match occurred. Assuming that 2ND_4 does not match 2ND_1 - 2ND_3 then COUNT 56 is sent to adder 78 to be incremented and compared to MAX. If the updated COUNT is smaller than or equal to MAX then 2ND_4 is stored in entry 34, the output index value is stored at an address linked to 2ND_4, and a next output index value is fetched to register 7. If CONUT is greater than MAX then 2ND_4 can not be stored in entry 34. According to one embodiment of the invention hasher F1 13 is reconfigured to implement another hashing function and all output index value are to be processed according to the other hashing function. If 2ND_4 matches one of 2ND_1 - 2ND_3 then SEED 56 is sent to adder 78, incremented, and an updated SEED 55 are sent to hasher F2 16 in order to calculate the second hash values of all output index value associated to entry 34.

Conveniently, comparator 18 and adder 78 can be implemented by a control unit that also generates the appropriate control signals and address signals to tables 30 and 70.

Preferably, the hashing function is a CRC function. Preferably, the first hashing function differs from the second hash value function. Preferably, the at least first portion of the input key differs from the at least second portion of the input key. Preferably, the input key is extracted from a TCP/IP protocol header.

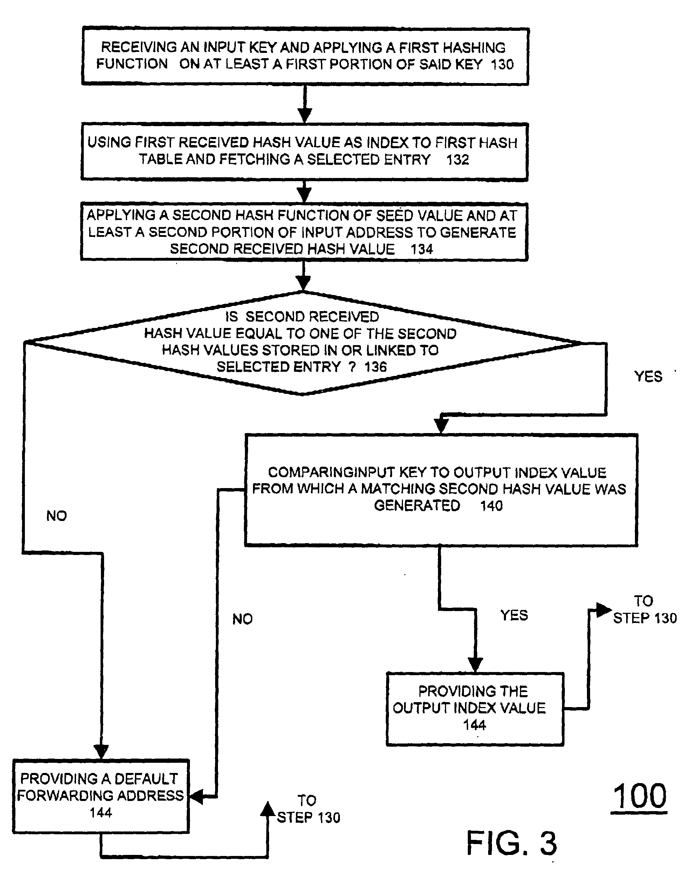

Referring to FIGS. 3-4 illustrating a method 100 for performing hash based address translation, according to a preferred embodiment of the invention.

Method 100 comprises the steps of:
Step 130 of receiving an input key and applying a first hashing function on at least a first portion of the input key to generate a first received hash value.
Step 132 of using the first received hash value as an index to a first hash table and fetching a selected entry.
Step 134 of applying a second hash value function to at least a second portion of the input key and to a seed value stored within the selected entry to generate a second received hash value.
Step 136 of comparing the second received hash value to the second hash values stored in the selected entry. If they do not match step 136 is followed by step 144. If one of the second hash values matches the second received hash value then match step 138 is followed by step 140 of comparing the input key to an output index value from which the matching second has value was generated. If both addresses match then step 140 is followed by step 142 of providing the output index value. Else, step 140 is followed by step 144.
Step 144 of providing a default output index value.

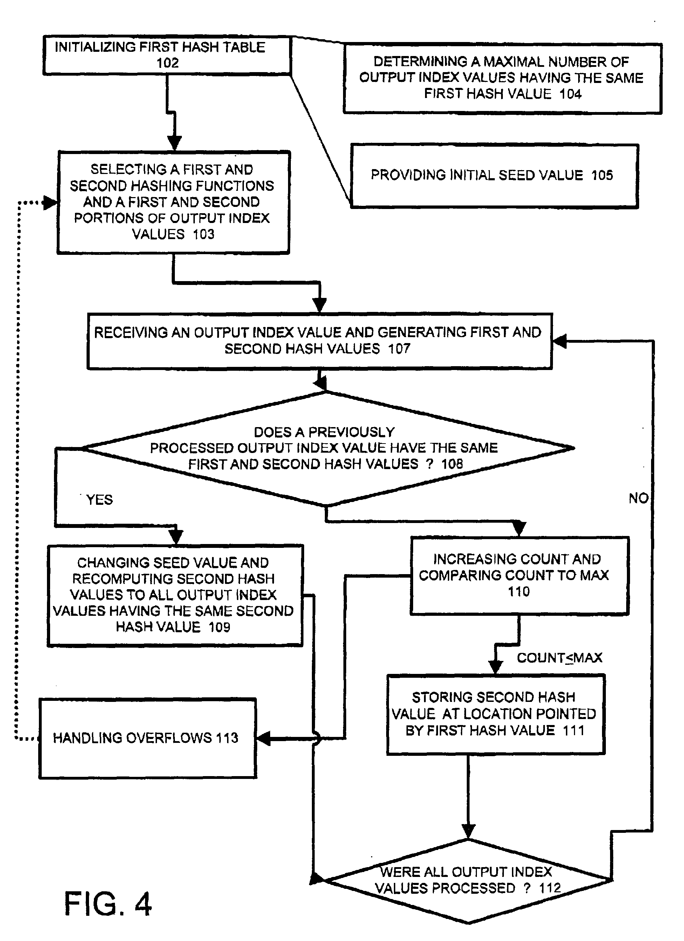

The first hash table is generated by the following steps (cf. FIG. 4):
Step 102 of initializing the entries of the first hash tables; conveniently said step comprises of resetting the entries, resetting the seed values SEED. Optionally, determining a maximal number MAX of second hash values that can be associated to a single first hash value
Step 103 of selecting a first hashing function and at least a first portion of an output index value on which the hashing function is to be applied to generate a first hash value, selecting a second hashing function and at least a second portion of the output index value on which the second hashing function is to be applied to generate a second hash value.
Step 106 of processing a output index value, said step comprises of the steps of:
Step 107 of processing two portions of a output index value and generating a first hash value and a second hash value.
Step 108 of checking whether second hash values generated during step 107 equals second hash values of previous output index value that have the same first hash value. If the answer is 'yes' step 108 is followed by step 109 of changing SEED and computing second hash values for all output index value having the same first hash value. Step 109 can be repeated until separate second hash values are found for all forwarding values having the same first hash value. Step 109 is followed by step 109. If the answer is 'no' step 108 is followed by step 110.
Step 110 of increasing COUNT and comparing COUNT to MAX. If COUNT is equal to MAX or smaller than MAX then step 110 is followed by step 111 of storing the second hash value, storing the output index value at a location indexed by second hash value and storing the updated COUNT. Step 111 is followed by step 112 of checking if all output index value were processed, if the answer is 'no' step 112 is followed by step 107 so that another output index value is processed. If the answer is 'yes' step 112 is followed by step 113 of handling overflows.

Conveniently step 113 involves selecting another hashing function instead of the first hashing function and processing all generating the first hash table by applying the other hashing table. Step 113 is followed by step 103.

Having described the invention in detail, the invention is not summarized for an apparatus 10 for hash translation of an input key to generate an Output index value: A first hasher 13 applies a first hashing function on at least a first portion of an input key to generate a first received hash value; a second hasher 16 applies a second hashing function on at least a second portion of the input key to generate a second received hash value; a first hash table 30 has a plurality of entries 31-39; a control unit 8 is coupled to the first hasher, the second hasher, the first hash table, and to a table 60 of output index values, the control unit is adapted to receive the input key, to provide at least a first portion of the input key to the first hasher, to provide a seed value and at least a second portion of the input key to the second hasher, and to check whether the first and second received hash value match a first and second hash values generated from a matching output index value out of a group of output index value and accordingly to provide an output index value.

Preferably, the first hash value is used as an index to the first hash table. Preferably, the control unit comprises a memory module for storing the plurality of second hash values associated to the first received hash value. Preferably, the memory module is a CAM module. Preferably, the control unit is further adapted to check if the first and second received hash value do not match any first and second hash values generated from an output index value of the group of output index value and accordingly to provide a default output index value.

Preferably, the control unit is further configured to check if the first and second received hash values match a first and second hash values generated from an output index value, and to check if the input key equals the output index value; and if they are equal the control unit provides the output index value as the output index value. Preferably, each first hash value points to an entry within a first hash table; and each entry stores a plurality of second hash values, each second hash value being generated from a seed value and from at least a second portion of the output index value having that points to the said entry. Preferably, the apparatus is further adapted to receive a group of output index value and to generate the first hash table, wherein the control unit is adapted to (a) initialize entries of the first hash table; (b) select a first hashing function and a first portion of a output index value on which the hashing function is to be applied to generate a first hash value, select a second hashing function and a second portion of the output index value on which the hashing function is to be applied to generate a second hash value; (c) receive a output index value, receive from first and second hashers a first hash value and a second hash value, store the second hash value at a location pointed by the first hash value, store an output index value at a location pointed by the second hash value.

Preferably, the control unit is further adapted to check whether second hash values that were generated from distinct input keys having a same first hash value are equal; and if yes to generate an updated second hash value by providing to the second hasher at least a second portion of the output index value and an updated seed value. Preferably, the control unit is further adapted to check whether a number of output index value having the same first hash value exceeds a maximal number; and if the answer is 'yes' to select another hashing function instead of the first hashing function and to rebuilding the first hash table using the other hashing function. Preferably, the hashing function is a CRC function; the input key is extracted from a TCP/IP protocol header; the first hashing function differs from the second hash value function; and at least first portion of the input key differs from the at least second portion of the input key.

Thus, there has been described herein an embodiment including at least one preferred embodiment of a method and apparatus for hashing translation. It will be apparent to those skilled in the art that the disclosed subject matter may be modified in numerous ways and may assume many embodiments other than the preferred form specifically set out and described above. Accordingly, the above disclosed subject matter is to be considered illustrative and not restrictive, and to the maximum extent allowed by law, it is intended by the appended claims to cover all such modifications and other embodiments which fall within the true spirit and scope of the present invention.

## Claims

1. A method (100) for translating an input key to generate an output index value, the method comprising the steps of:
(a) receiving (130) the input key;
(b) applying (132) a first hashing function on at least a first portion of the input key to generate a first received hash value;
(c) applying (134) a second hashing function on at least a second portion of the input key and on a seed value to generate a second received hash value;
(d) checking (136) whether the first and second received hash values match the first and second hash values generated from an output index value out of a group of output index values and accordingly providing an output index value.

2. The method of claim 1 wherein the seed value is selected according to the first received hash value.

3. The method of claim 1 wherein if the first and second received hash values do not match any first and second hash values generated from a matching output index value of the group of output index value then a default output index value is provided.

4. The method of claim 1 wherein if the first and second received hash value match first and second hash values generated from a matching output index value, further checking if the input key equals the matching output index value; and if they are equal providing the matching output index value as the output index value.

5. The method of claim 1 wherein each first hash value points to an entry within a first hash table (30); and wherein each entry stores a plurality of second hash values, each second hash value being generated from a seed value and from at least a second portion of a output index value having the same first hash value.

6. The method of claim 1 wherein each first hash value points to an entry (31-39) within a first hash table; and wherein each entry stores a pointer to a plurality of second hash values (2ND), each second hash value being generated from a seed value and from at least a second portion of a output index value having the same first hash value.

7. The method of claim 6 wherein the first hash table is generated by the following steps:
(a) initializing entries of the first hash table (102);
(b) selecting a first hashing function and at least a first portion of a output index value on which the first hashing function is to be applied to generate a first hash value, selecting a second hashing function and at least a second portion of the output index value on which the hashing function is to be applied to generate a second hash value (103);
(c) for each output index value repeating the step of: fetching an output input value, generating a first hash value and a second hash value (107), storing the second hash value at a location pointed by the first hash value (111), storing the output index value at a location linked to the second hash value.

8. The method of claim 7 wherein step (a) comprises the steps of resetting the entries of the first hash table.

9. The method of claim 7 further comprising a step of checking whether second hash values that were generated from distinct output index values having a same first hash value are equal; if yes, generating an updated second hash value by applying the second hash value hashing function on the at least second portion of the output index value and on an updated seed value.

10. The method of claim 9 further comprising a step of determining a maximal number of output index values that can have a same first hash value.

11. The method of claim 10 further comprising a step of checking whether a number of output index value that have a same first hash value exceeds the maximal number; and if yes, selecting another hashing function instead of the first hashing function and rebuilding the first hash table.

12. An apparatus (10) for hash translation of an input key to generate an Output index value, the apparatus comprising:
a first hasher (13) for applying a first hashing function on at least a first portion of an input key to generate a first received hash value;
a second hasher (16) for applying a second hashing function on at least a second portion of the input key to generate a second received hash value;
a first hash table (30) comprising of a plurality of entries (31-39);
a control unit (8), coupled to the first hasher, the second hasher, the first hash table, a table (60) of output index values, the control unit being adapted to receive the input key, to provide at least first portion of the input key to the first hasher, to provide a seed value and at least a second portion of the input key to the second hasher; and to check whether the first and second received hash value match a first and second hash values generated from a matching output index value out of a group of output index value and accordingly to provide an output index value.
